(19) Europäisches Patentamt | European Patent Office | Office européen des brevets

(11) **EP 3 982 350 B1**

(12) **EUROPEAN PATENT SPECIFICATION**

(45) Date of publication and mention of the grant of the patent:
**13.12.2023 Bulletin 2023/50**

(21) Application number: **19931696.9**

(22) Date of filing: **07.06.2019**

(51) International Patent Classification (IPC):
*G09C 1/00* (2006.01)     *G06F 17/12* (2006.01)
*H04L 9/06* (2006.01)

(52) Cooperative Patent Classification (CPC):
**H04L 9/06; G06F 17/12;** H04L 2209/16;
H04L 2209/46

(86) International application number:
**PCT/JP2019/022701**

(87) International publication number:
**WO 2020/246018 (10.12.2020 Gazette 2020/50)**

(54) **SECRET CONJUGATE GRADIENT METHOD CALCULATION SYSTEM, SECRET CALCULATION DEVICE, CONJUGATE GRADIENT METHOD CALCULATION DEVICE, SECRET CONJUGATE GRADIENT METHOD CALCULATION METHOD, CONJUGATE GRADIENT METHOD CALCULATION METHOD, AND PROGRAM**

SYSTEM ZUR GEHEIMEN BERECHNUNG MIT VERFAHREN DER KONJUGIERTEN GRADIENTEN, VORRICHTUNG ZUR GEHEIMEN BERECHNUNG, VORRICHTUNG ZUR GEHEIMEN BERECHNUNG MIT VERFAHREN DER KONJUGIERTEN GRADIENTEN, VERFAHREN ZUR BERECHNUNG MIT VERFAHREN DER KONJUGIERTEN GRADIENTEN UND PROGRAMM

SYSTÈME DE CALCUL DE PROCÉDÉ DE GRADIENT CONJUGUÉ SECRET, DISPOSITIF DE CALCUL SECRET, DISPOSITIF DE CALCUL DE PROCÉDÉ DE GRADIENT CONJUGUÉ, PROCÉDÉ DE CALCUL DE PROCÉDÉ DE GRADIENT CONJUGUÉ SECRET, PROCÉDÉ DE CALCUL DE PROCÉDÉ DE GRADIENT CONJUGUÉ ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.04.2022 Bulletin 2022/15**

(73) Proprietor: **Nippon Telegraph And Telephone Corporation**
Chiyoda-ku,
Tokyo 100-8116 (JP)

(72) Inventor: **HAMADA, Koki**
**Musashino-shi, Tokyo 180-8585 (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:
JP-A- 2006 227 939     JP-A- 2011 145 999
JP-A- 2018 124 681     US-A1- 2015 234 781

• ADRIA GASCON ET AL: "Privacy-Preserving Distributed Linear Regression on High-Dimensional Data", IACR, INTERNATIONAL ASSOCIATION FOR CRYPTOLOGIC RESEARCH , vol. 20171017:114427 29 June 2017 (2017-06-29), pages 1-20, XP061023363, Retrieved from the Internet: URL:http://eprint.iacr.org/2016/892.pdf[retrieved on 2017-06-29]
• JEREZ JUAN LUIS ET AL: "A Low Complexity Scaling Method for the Lanczos Kernel in Fixed-Point Arithmetic", IEEE TRANSACTIONS ON COMPUTERS, IEEE, USA, vol. 64, no. 2, 1 February 2015 (2015-02-01), pages 303-315, XP011569807, ISSN: 0018-9340, DOI: 10.1109/TC.2013.162 [retrieved on 2015-01-12]

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 982 350 B1

- **MAFI, RAMIN et al.: "A Parallel Computing Platform for Real-Time Haptic Interaction with Deformable Bodies", IEEE Transactions on Haptics, vol. 3, no. 3, 2010, pages 211-223, XP011297875,**
- **CHANG, PISHENG et al.: "Analysis of Conjugate Gradient Algorithms for Adaptive Filtering", IEEE Transactions on Signal Processing, vol. 48, no. 2, 2000, pages 409-418, XP011058841,**

## Description

[Technical Field]

The invention relates to a numerical computation technique, and particularly relates to a method for efficiently solving simultaneous linear equations using secure computation.

[Background Art]

A method called a conjugate gradient method is known as an algorithm for solving simultaneous linear equations having a symmetric positive definite matrix as a coefficient. In the conjugate gradient method, iterative computation is used to compute an approximate value of the solution of simultaneous equations (see, for example, NPL 1).

Typically, the conjugate gradient method uses a floating-point number for computation. Also when the conjugate gradient method is used in secure computation, the computation is possible by using a floating-point number. However, in secure computation, the computational cost for a floating-point number is high, and thus the computational cost for the conjugate gradient method with secure computation using a floating-point number is significantly high.

Some of methods in which real numbers are used in secure computation use a fixed-point number, instead of a floating-point number. Because the computational cost for a fixed-point number is lower than the computational cost for a floating-point number, if the conjugate gradient method can be realized by using a fixed-point number, it is possible to reduce the computational cost for the conjugate gradient method.

NPL 2 discloses privacy-preserving protocols for computing linear regression models in a setting where the training dataset is vertically distributed among several parties.

[Citation List]

[Non Patent Literature]

[NPL 1] Jonathan Richard Shewchuk, "An Introduction to the Conjugate Gradient Method Without the Agonizing Pain," 1994.
[NPL 2] Adria Gascon et al., "Privacy-Preserving Distributed Linear Regression on High-Dimensional Data," IACR, International Association for Cryptologic Research, Proceedings on Privacy Enhancing Technologies, 2017, vol. 4, pp. 248-267.

[Summary of the Invention]

[Technical Problem]

However, if the conjugate gradient method is realized by using a fixed-point number, an overflow may occur with a value halfway through computation. If an overflow occurs, a correct computation result cannot be obtained, and thus it is desirable to make it possible to compute the conjugate gradient method so that no overflow occurs.

In view of the foregoing technical problem, an object of the present invention is to reduce the probability that an overflow will occur when the conjugate gradient method is realized by using a fixed-point number.

[Means for Solving the Problem]

In order to solve the foregoing problem, the present invention provides a secure computation apparatus, a secure conjugate gradient method computation system, a secure conjugate gradient method computation method, and a corresponding program as defined by the appended claims.

A secure conjugate gradient method computation system according to an example that is not encompassed by the claims but useful for understanding the present invention includes a plurality of secure computation apparatuses, the secure conjugate gradient method computation system being configured to obtain, letting X be a set of values for computing a product of a d-dimensional real symmetric positive definite matrix A and a d-dimensional vector, $\vec{b}$ be a d-dimensional vector, f be a function for computing $A\vec{x}$ based on a matrix X and a d-dimensional vector $\vec{x}$, k be an integer of d or less, i be each of integers from 1 to k, $\vec{x}_0$ be a d-dimensional vector for which a suitable value is set, and D be a value whose absolute value is less than 1 and other than 0, an approximate solution $\vec{x}_k$ of a solution $\vec{x}^*$ of $A\vec{x} = \vec{b}$ with secret values of the set X and a secret value of the vector $\vec{b}$ used as inputs.

Each of the secure computation apparatuses includes: an initialization unit, a first computation unit, a second computation unit, a third computation unit, a fourth computation unit, a fifth computation unit, a sixth computation unit, a seventh computation unit, an eighth computation unit, and a ninth computation unit.

The initialization unit is configured to compute the following expression using secure computation, and generate secret values of vectors $\vec{p}_0$ and $\vec{r}_0$ and a value $\rho_0$;

[Math. 1]

$$\vec{p}_0 = \vec{r}_0 = \vec{b} - f(X, \vec{x}_0),$$
$$\rho_0 = \vec{r}_0^T \vec{r}_0$$

The first computation unit is configured to compute the following expression using secure computation, and generate a secret value of a vector $\vec{a}_{i-1}$;

[Math. 2]

$$\vec{a}_{i-1} = D \times \left( f(X, \vec{p}_{i-1}) \right)$$

The second computation unit is configured to compute the following expression using secure computation, and generate a secret value of a value $\gamma_{i-1}$;

[Math. 3]

$$\gamma_{i-1} = D \times \left( \vec{p}_{i-1}^T \vec{a}_{i-1} \right)$$

The third computation unit is configured to compute the following expression using secure computation, and generate a secret value of a value $\alpha_{i-1}$;

[Math. 4]

$$\alpha_{i-1} = \frac{\rho_{i-1}}{\gamma_{i-1}}$$

The fourth computation unit is configured to compute the following expression using secure computation, and generate a secret value of a vector $\vec{d}_i$;

[Math. 5]

$$\vec{d}_i = D \times \left( \alpha_{i-1} \vec{p}_{i-1} \right)$$

The fifth computation unit is configured to compute the following expression using secure computation, and generate a secret value of a vector $\vec{x}_i$;

[Math. 6]

$$\vec{x}_i = \vec{x}_{i-1} + \vec{d}_i$$

The sixth computation unit is configured to compute the following expression using secure computation, and generate a secret value of a vector $\vec{r}_i$;

[Math. 7]

$$\vec{r}_i = \vec{r}_{i-1} - \alpha_{i-1} \vec{a}_{i-1}$$

The seventh computation unit is configured to compute the following expression using secure computation, and generate a secret value of a value $\rho_i$;

[Math. 8]

$$\rho_i = D \times \left( \vec{r}_i^T \vec{r}_i \right)$$

The eighth computation unit is configured to compute the following expression using secure computation, and generate a secret value of a value $\beta_i$;

[Math. 9]

$$\beta_i = \frac{\rho_i}{\rho_{i-1}}$$

The ninth computation unit is configured to compute the following expression using secure computation, and generate a secret value of a vector $\vec{p}_i$.

[Math. 10]

$$\vec{p}_i = \vec{r}_i - \beta_i \vec{p}_{i-1}$$

[Effects of the Invention]

According to the present invention, values obtained halfway through the computation of the conjugate gradient method can be kept small, thus making it possible to reduce the possibility that an overflow will occur when the conjugate gradient method is realized by using a fixed-point number.

[Brief Description of Drawings]

[Fig. 1]

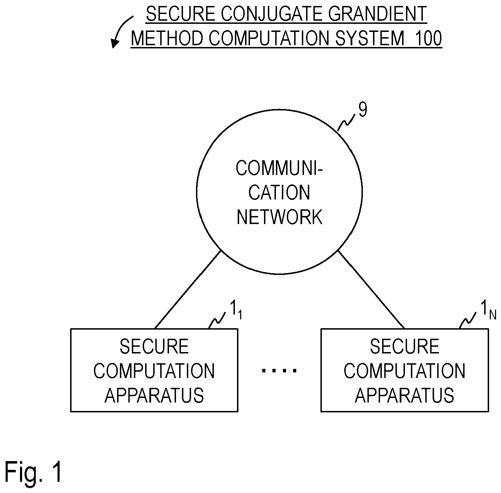

Fig. 1 is a diagram illustrating an example of a functional configuration of a secure conjugate gradient method computation system.
[Fig. 2]

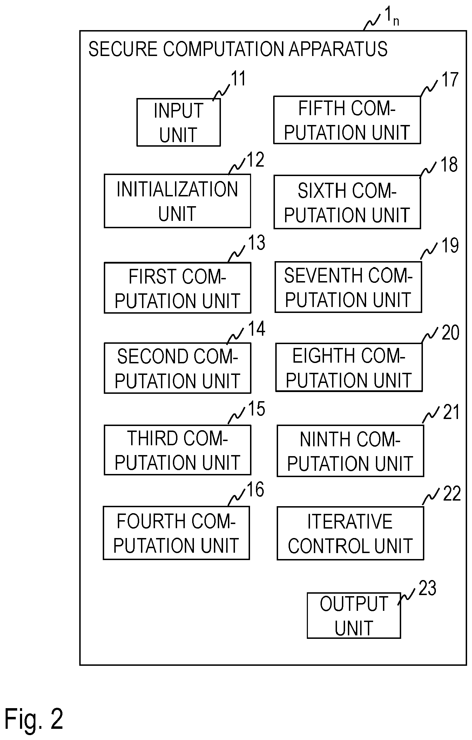

Fig. 2 is a diagram illustrating an example of a functional configuration of a secure computation apparatus.
[Fig. 3]

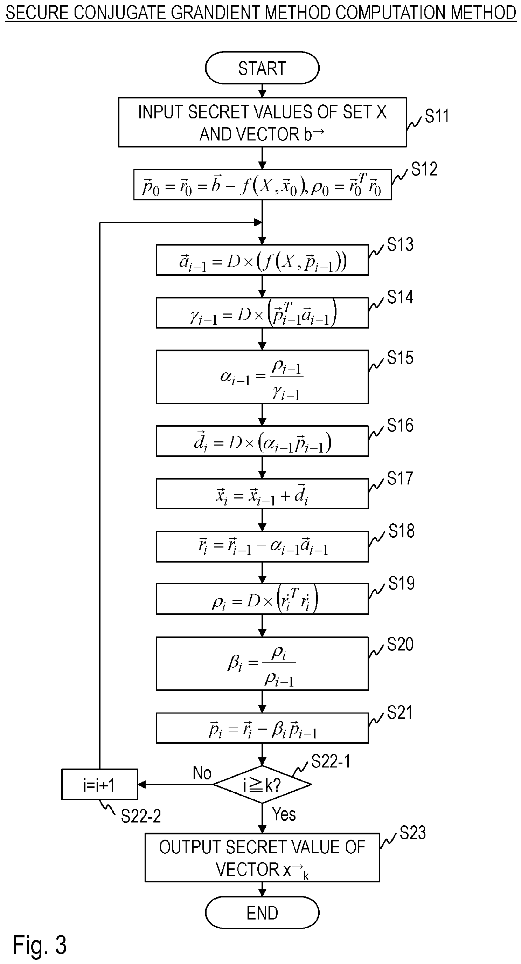

Fig. 3 is a diagram illustrating an example of a processing procedure of a secure conjugate gradient method computation method.
[Fig. 4]

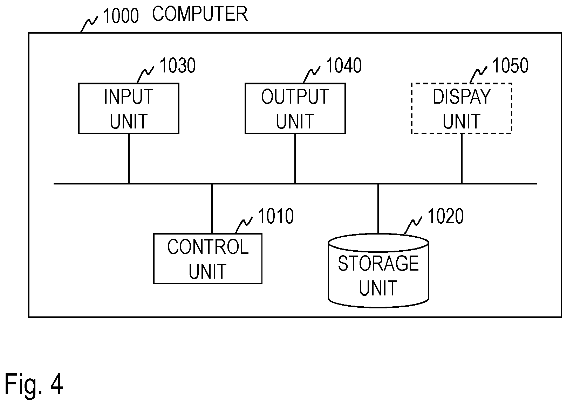

Fig. 4 is a diagram illustrating an example of a functional configuration of a computer.

[Description of Embodiments]

First, a notation system and definition of terms in the present specification will be described.

<Notation System>

A symbol "→" (superscript arrow) used in the specification is a symbol that should be essentially given immediately above the character immediately before the symbol, but is given immediately after this character due to limitation of text description. In the mathematical expressions, these symbols are given at an original position, that is, at a position immediately above the corresponding character. For example, "$a^{\rightarrow}$" is expressed, in the mathematical expressions, as follows.

[Math. 11]

$$\vec{a}$$

For example, as "$a^{\rightarrow}$", a symbol with a superscript arrow added immediately after a character (symbol with an arrow added immediately above a character in a mathematical expression) denotes a column vector.

"$\cdot^T$" (superscript index "T") denotes transposition.
$a^{\rightarrow T}b^{\rightarrow}$ denotes an inner product of a vector $a^{\rightarrow}$ and a vector $b^{\rightarrow}$.

<Secure Computation>

As a method for obtaining a specific computation result without recovering an encrypted numeric value, there is a method called secure computation (see, for example, Reference Literature 1) . In the method described in Reference Literature 1, encryption is performed such that fragments of a numerical value are distributed over three secure computation apparatuses, and the three secure computation apparatuses perform cooperative computation. Accordingly, the three secure computation apparatuses can store a result of addition/subtraction, constant addition, multiplication, constant multiplication, logical operation (NOT, AND, OR, and exclusive-OR), or data format conversion (integer, binary number), without recovering the numerical value, in a state in which it is distributed over the three secure computation apparatuses, that is, in an encrypted state.

[Reference Literature 1] Koji SENDA, Hiroki HAMADA, Masaru IGARASHI, Katsumi TAKAHASHI, "A Three-Party Secure Function Evaluation with Lightweight Verifiability Revisited", CSS, 2010

<Conjugate Gradient Method>

The conventional conjugate gradient method described in NPL 1 will be described in more detail. The conjugate gradient method is a method for computing, using iterative computation, an approximate value of the solution $x^{\rightarrow}* = A^{-1}b^{\rightarrow}$ of $Ax^{\rightarrow} = b^{\rightarrow}$ with a set X of values for computing a product of a d-dimensional real symmetric positive definite matrix A and a d-dimensional vector, and a d-dimensional vector $b^{\rightarrow}$ used as inputs. Specifically, in the conjugate gradient method, a vector $x^{\rightarrow}_0$, which is a default approximate solution, is set to a suitable value, the following values are computed in the order from i = 1, and a vector $x^{\rightarrow}_k$ for sufficiently large k is output as an approximate solution. Note that k is assumed to be up to about d, and is set according to a desired accuracy of approximation. For example, if d = 100 is satisfied, it is sufficient to set k = 10, for example. Also, the computation of the values does not need to be performed in the order described in the following expression, and may be performed in different order as long as the computation is possible. Alternatively, a plurality of values may also be computed in parallel.

[Math. 12]

$$\vec{p}_0 = \vec{r}_0 = \vec{b} - f(X, \vec{x}_0)$$

$$\rho_0 = \vec{r}_0^T \vec{r}_0$$

$$\vec{a}_{i-1} = f(X, \vec{p}_{i-1})$$

$$\gamma_{i-1} = \vec{p}_{i-1}^T \vec{a}_{i-1}$$

$$\alpha_{i-1} = \frac{\rho_{i-1}}{\gamma_{i-1}}$$

$$\vec{d}_i = \alpha_{i-1} \vec{p}_{i-1}$$

$$\vec{x}_i = \vec{x}_{i-1} + \vec{d}_i$$

$$\vec{r}_i = \vec{r}_{i-1} - \alpha_{i-1} \vec{a}_{i-1}$$

$$\rho_i = \vec{r}_i^T \vec{r}_i$$

$$\beta_i = \frac{\rho_i}{\rho_{i-1}}$$

$$\vec{p}_i = \vec{r}_i - \beta_i \vec{p}_{i-1}$$

Where f is a function for computing $A\vec{x}$ based on the set X and a d-dimensional vector $\vec{x}$. Specific examples of the set X and the function f are given as follows. Note however that n is a suitable natural number.

· $X = \{A\}, f(X, \vec{x}) = A\vec{x}$

· $X = \{B\}, f(X, \vec{x}) = BB^T\vec{x}$, where B is a matrix of d rows and n columns,
· $X = \{B, C\}, f(X, \vec{x}) = BCB^T\vec{x}$, where B is a matrix of d rows and n columns, and C has a diagonal component that is a positive d-order diagonal matrix.

When the conjugate gradient method is performed with secure computation, the conjugate gradient method needs only to define input and output values as secret values by predetermined secret sharing, and realize the computation of the values by, for example, a combination of operations of the secure computation described in Reference Literature 1. That is to say, in the conjugate gradient method, secret values of the set X and the vector $\vec{b}$ that are subjected to secret sharing are used as inputs, and these values are computed by secure computation in a state in which the original values are kept as secret, and a secret value that serves as an approximate solution $\vec{x}_k$ when being recovered is output.

<Point of The Invention>

The present invention is such that a suitable value D that satisfies $|D| < 1$ and $D \neq 0$ (in other words, a suitable value D whose absolute value is less than 1 and other than 0) is set, and when values of $\vec{a}_{i-1}$, $\gamma_{i-1}$, $\vec{d}_i$, and $\rho_i$ are computed in the conjugate gradient method, D-fold values of these values are computed, and are defined as the respective values of $\vec{a}_{i-1}$, $\gamma_{i-1}$, $\vec{d}_i$, and $P_i$. Accordingly, values that are obtained halfway through computation of the conjugate gradient method and are likely to be large values can be kept small, thus making it possible to reduce the probability that an overflow will occur. The point of the present invention is a configuration in which, particularly, the magnitudes of values obtained halfway through the computation are changed but the finally obtained solution is not changed.

Hereinafter, an embodiment of the present invention will be described in detail. Note that, in the drawings, the same reference numerals are given to the same constituent components, and redundant descriptions are omitted.

[Embodiment]

An example of a configuration of a secure conjugate gradient method computation system according to an embodiment will be described with reference to Fig. 1. As shown in Fig. 1, a secure conjugate gradient method computation system 100 includes, for example, N ($\geq 2$) secure computation apparatuses $1_1, ..., 1_N$. In the present embodiment, the secure computation apparatuses $1_1, ..., 1_N$ are each connected to a communication network 9. The communication network 9 is a circuit switching type or packet switching type communication network that is configured so that the connected apparatuses are capable of communicating with each other, and the communication network 9 can be, e.g., the Internet, a LAN (Local Area Network), a WAN (Wide Area Network), or the like. Note that the apparatuses cannot necessarily online communicate with each other via the communication network 9. For example, the secure computation apparatuses may also be configured such that information to be input to the secure computation apparatuses $1_1, ..., 1_N$ is stored in a portable recording medium such as a magnetic tape and a USB memory, and is input offline from the portable recording medium to the secure computation apparatuses $1_1, ..., 1_N$.

An example of a configuration of a secure computation apparatus $1_n$ (n = 1, ..., N) included in the secure conjugate gradient method computation system 100 according to the embodiment will be described with reference to Fig. 2. As shown in Fig. 2, the secure computation apparatus $1_n$ includes, for example, an input unit 11, an initialization unit 12, a first computation unit 13, a second computation unit 14, a third computation unit 15, a fourth computation unit 16, a fifth computation unit 17, a sixth computation unit 18, a seventh computation unit 19, an eighth computation unit 20, a ninth computation unit 21, an iterative control unit 22, and an output unit 23. As a result of this secure computation apparatus $1_n$ (n = 1, ..., N) cooperating with another secure computation apparatus $1_{n'}$ (n' = 1, ..., N, where n ≠ n') to execute processing of later-described steps, a secure conjugate gradient method computation method according to the present embodiment is realized.

The secure computation apparatus $1_n$ is, for example, a specific apparatus obtained by a well-known or dedicated computer including a Central Processing Unit (CPU), a main storage unit (RAM: Random Access Memory), and the like reading a specific program. The secure computation apparatus $1_n$ executes various types of processing under control of the central processing unit, for example . Data input to the secure computation apparatus $1_n$ and data obtained by each type of processing are stored in, for example, the main storage unit, and the data stored in the main storage unit is read to the central processing unit as needed, and is used for another type of processing. At least some of the processing units of the secure computation apparatus $1_n$ may be constituted by hardware such as an integrated circuit.

A processing procedure of the secure conjugate gradient method computation method executed by the secure conjugate gradient method computation system 100 according to the embodiment will be described with reference to Fig. 3.

In step S11, secret values of the set X and a secret value of the vector $\vec{b}$ are input to the input unit 11 of each secure computation apparatus $1_n$. The set X is a set of values for computing the product of the d-dimensional real symmetric positive definite matrix A and a d-dimensional vector. The vector $\vec{b}$ is a d-dimensional vector. The input unit 11 outputs the secret values of the set X and the secret value of the vector $\vec{b}$ to the initialization unit 12.

In step S12, the initialization unit 12 of the secure computation apparatus $1_n$ sets a default approximate solution $\vec{x}_0$ to a suitable value (that is, generate a vector $\vec{x}_0$ for which a suitable value is set), computes the following expression using secure computation, and generates secret values of vectors $\vec{p}_0$ and $\vec{r}_0$ and a value $\rho_0$. Also, the initialization unit 12 initializes the index i of the iterative processing to i = 1.

[Math. 13]

$$\vec{p}_0 = \vec{r}_0 = \vec{b} - f(X, \vec{x}_0),$$

$$\rho_0 = \vec{r}_0^T \vec{r}_0$$

The initialization unit 12 outputs the secret value of the vector $\vec{p}_0$ to the first computation unit 13, the second computation unit 14, the fourth computation unit 16, and the ninth computation unit 21. Also, the initializa-

zation unit 12 outputs the secret value of the vector $\vec{r}_0$ to the sixth computation unit 18. Furthermore, the initialization unit 12 outputs the secret value of the value $\rho_0$ to the third computation unit 15 and the eighth computation unit 20. Then, the initialization unit 12 outputs the index i to the iterative control unit 22.

In step S13, the first computation unit 13 of each secure computation apparatus $1_n$ computes the following expression using secure computation, and generates a secret value of a vector $\vec{a}_{i-1}$. That is to say, the first computation unit 13 multiplies each value of the vector $\vec{a}_{i-1}$ obtained by the conventional conjugate gradient method by D, and defines the obtained product as the value of the vector $\vec{a}_{i-1}$. The first computation unit 13 outputs the secret value of the vector $\vec{a}_{i-1}$ to the second computation unit 14 and the sixth computation unit 18.

[Math. 14]

$$\vec{a}_{i-1} = D \times \left( f(X, \vec{p}_{i-1}) \right)$$

In step S14, the second computation unit 14 of each secure computation apparatus $1_n$ computes the following expression using secure computation, and generates a secret value of a value $\gamma_{i-1}$. That is to say, the second computation unit 14 multiplies the value $\gamma_{i-1}$ obtained by the conventional conjugate gradient method by D, and defines the obtained product as the value $\gamma_{i-1}$. The second computation unit 14 outputs the secret value of the value $\gamma_{i-1}$ to the third computation unit 15.

[Math. 15]

$$\gamma_{i-1} = D \times \left( \vec{p}_{i-1}^T \vec{a}_{i-1} \right)$$

In step S15, the third computation unit 15 of each secure computation apparatus $1_n$ computes the following expression using secure computation, and generates a secret value of a value $\alpha_{i-1}$. The third computation unit 15 outputs the secret value of the value $\alpha_{i-1}$ to the fourth computation unit 16 and the sixth computation unit 18.

[Math. 16]

$$\alpha_{i-1} = \frac{\rho_{i-1}}{\gamma_{i-1}}$$

In step S16, the fourth computation unit 16 of each secure computation apparatus $1_n$ computes the following expression using secure computation, and generates a secret value of a vector $\vec{d}_i$. That is to say, the fourth computation unit 16 multiplies each value of the vector d→ᵢ obtained by the conventional conjugate gradient method by D, and defines the obtained product as the value of the vector d→ᵢ. The fourth computation unit 16 outputs the secret value of the vector d→ᵢ to the fifth computation unit 17.

[Math. 17]

$$\vec{d}_i = D \times \left( \alpha_{i-1} \vec{p}_{i-1} \right)$$

In step S17, the fifth computation unit 17 of each secure computation apparatus $1_n$ computes the following expression using secure computation, and generates a secret value of a vector x→ᵢ. The fifth computation unit 17 outputs the secret value of the vector x→ᵢ to the output unit 23.

[Math. 18]

$$\vec{x}_i = \vec{x}_{i-1} + \vec{d}_i$$

In step S18, the sixth computation unit 18 of each secure computation apparatus $1_n$ computes the following expression using secure computation, and generates a secret value of a vector r→ᵢ. The sixth computation unit 18 outputs the secret value of the vector r→ᵢ to the seventh computation unit 19.

[Math. 19]

$$\vec{r}_i = \vec{r}_{i-1} - \alpha_{i-1} \vec{a}_{i-1}$$

In step S19, the seventh computation unit 19 of each secure computation apparatus $1_n$ computes the following expression using secure computation, and generates a secret value of a value $\rho_i$. That is to say, the seventh computation unit 19 multiplies each value $\rho_i$ obtained by the conventional conjugate gradient method by D, and defines the obtained product as the value $\rho_i$. The seventh computation unit 19 outputs the secret value of the value $\rho_i$ to the eighth computation unit 20.

[Math. 20]

$$\rho_i = D \times \left( \vec{r}_i^T \vec{r}_i \right)$$

In step S20, the eighth computation unit 20 of each secure computation apparatus $1_n$ computes the following expression using secure computation, and generates a secret value of a value $\beta_i$. The eighth computa-

tion unit 20 outputs the secret value of the value $\beta_i$ to the ninth computation unit 21.

[Math. 21]

$$\beta_i = \frac{\rho_i}{\rho_{i-1}}$$

In step S21, the ninth computation unit 21 of each secure computation apparatus $1_n$ computes the following expression using secure computation, and generates a secret value of a vector p→ᵢ. The ninth computation unit 21 outputs the secret value of the vector p→ᵢ to the first computation unit 13, second computation unit 14, and the fourth computation unit 16.

[Math. 22]

$$\vec{p}_i = \vec{r}_i - \beta_i \vec{p}_{i-1}$$

In step S22-1, the iterative control unit 22 of each secure computation apparatus $1_n$ determines whether or not i is k or more, that is, whether or not i ≥ k is satisfied. Note however that k is a predetermined integer that is sufficiently large. If it is determined that i ≥ k is not satisfied, that is, i < k is satisfied, the iterative control unit 22 moves to the processing in step S22-2. Whereas if it is determined that i ≥ k is satisfied, the iterative control unit 22 moves to the processing in step S23. In step S22-2, the iterative control unit 22 of the secure computation apparatus $1_n$ increments i by 1, that is, computes i = i + 1, and returns to the processing in step S13. In other words, the iterative control unit 22 performs control so that with respect to each i, where i = 1, ..., k, the processing from the first computation unit 13 to the ninth computation unit 21 is repeatedly performed.
In step S23, the output unit 23 of each secure computation apparatus $1_n$ outputs the secret value of the vector x→ₖ as a secret value of an approximate value of the solution x→* = A⁻¹b→ of Ax→ = b-.

[Modification]

In the above-described embodiment, a configuration has been described in which the present invention is applied when a conjugate gradient method is realized by secure computation. However, in addition to the case using secure computation, the present invention is also applicable to a case where one computer computes the conjugate gradient method using input and output as plain text. In this case, similar to the secure computation apparatus $1_n$ of the embodiment, a conjugate gradient method computation apparatus according to a modification includes the input unit 11, the initialization unit 12, the first computation unit 13, the second computation unit 14, the third computation unit 15, the fourth computation unit 16, the fifth computation unit 17, the sixth computation unit 18, the seventh computation unit 19, the eighth computation unit 20, the ninth computation unit 21, the iterative control unit 22, and the output unit 23, and is configured to perform computation of the processing units using plain text. That is to say, the conjugate gradient method computation apparatus according to the modification needs only to receive inputs of a set X in plain text and a vector $\vec{b}$ in plain text, multiply the values of $\vec{a}_{i-1} \cdot \gamma_{i-1}$, $\vec{d}_i$, and $\rho_i$ obtained by the conventional conjugate gradient method by D, define the obtained products as the values of $\vec{a}_{i-1} \cdot \gamma_{i-1}$, $\vec{d}_i$, and $\rho_i$, and output an approximate solution $\vec{x}_k$ in plain text.

<Effects of the Present Invention>

In a conjugate gradient method, the larger the dimension d of a matrix is, the greater a value obtained halfway through computation is. For example, in a case where $k \times k$ matrices A are arranged in a matrix, and k vectors $\vec{b}$ are arranged vertically, values of $\vec{a}_i$, $\gamma_i$, $\alpha_i$, $\vec{d}_i$, $\vec{x}_i$, and $\rho_i$ are respectively k-fold, $k^2$-fold, $k^{-1}$-fold, $k^{-1}$-fold, $k^{-1}$-fold, and k-fold of the original values before the arrangement, and the values of $\vec{a}_i$, $\gamma_i$, and $\rho_i$ are greater than the original values.
In the configuration of the embodiment, it is possible to multiply $\rho_i$ by D, $\vec{a}_i$ by D, $\gamma_i$ by $D^2$, and $\alpha_i$ by 1/D, where D is a suitable value that satisfies both $|D| < 1$ and $D \neq 0$, without changing the value of an approximate solution. Accordingly, in the configuration of the embodiment, it is possible to keep the values of $\vec{a}_i$, $\gamma_i$, and $\rho_i$ small. Here, $\rho_i$ is an error sum of squares that appears when the conjugate gradient method is computed. Also, $\vec{a}_i$ is a product of a matrix and a basis vector. Also, $\gamma_i$ is a square sum of the basis vector with respect to the matrix. Also, $\alpha_i$ is a ratio of the error sum of squares to the basis vector.
According to the present invention, similar to the above-described example, also in a case where, e. g. , $k \times k$ matrices A are arranged in a matrix and k vectors $\vec{b}$ are arranged vertically, by setting D = 1/k, it is possible to respectively define the values of $\vec{a}_i$, $\gamma_i$, $\alpha_i$, $\vec{d}_i$, $\vec{x}_i$, and $\rho_i$ as being 1-fold, 1-fold, 1-fold, $k^{-1}$-fold, $k^{-1}$-fold, and 1-fold of the original values before the arrangement. Accordingly, it is possible to keep the halfway values smaller than or equal to the original values without changing the value of the solution, and to reduce the probability that an overflow will occur.
The present invention is defined by the appended claims. The embodiment of the present invention has been described, but the specific configurations are not limited to the embodiment, and possible changes in design and the like are, of course, possible within the scope defined by the appended claims. Various types of processing described in the embodiment may be not only executed in a time series manner in accordance with the order of description, but also executed in parallel or individually when necessary or according to the throughput of the apparatus that performs the corresponding processing.

[Program and Storage Medium]

When various types of processing functions of the apparatuses described in the embodiment are implemented by a computer, the processing details of the functions that should be provided by each apparatus are described by a program. When the program is read in a storage unit 1020 of a computer shown in Fig. 4 and is operated by a control unit 1010, an input unit 1030, an output unit 1040, and the like, various types of processing functions of each apparatus are implemented on the computer.
The program in which the processing details is described can be recorded in a computer-readable recording medium. The computer-readable recording medium can be any type of recording medium such as a magnetic recording apparatus, an optical disk, a magneto-optical storage medium, a semiconductor memory, or the like, for example.
Also, this program is distributed by, e. g., selling, transferring, or lending a portable recording medium such as a DVD or a CD-ROM in which this program is recorded, for example. Furthermore, this program may also be distributed by storing the program in a storage device of a server computer, and forwarding the program from the server computer to another computer via a network.
A computer that executes this type of program first stores the program recorded in the portable recording medium or the program transferred from the server computer in its own storage device, for example. Then, when executing processing, this computer reads the program stored in the own storage device and executes processing in accordance with the read program. Also, in another execution mode of this program, the computer may directly read the program from the portable recording medium and may execute the processing in accordance with this program. In yet another execution mode of this program, each time the program is transferred to this computer from the server computer, this computer may execute the processing in accordance with the received program. A configuration is also possible in which the above-described processing is executed by a so-called ASP (Application Service Provider) service, which realizes processing functions only by giving program execution instructions and acquiring the results thereof without transferring the program from the server computer to this computer. Note that it is assumed that the programs of this embodiment include information that is provided for use in processing by an electronic computer and is treated as a program (that is not a direct instruction to the computer but is data or the like having characteristics that specify the processing executed by the computer).
Also, in this embodiment, the apparatuses are configured by executing the predetermined programs on the compute, but at least part of the processing details may also be implemented by hardware.

**Claims**

1. A secure computation apparatus ($1_n$ used in a secure conjugate gradient method computation system (100) adapted to obtain, the secure conjugate gradient method computation system being implemented using fixed-point numbers, letting X be a set of values for computing a product of a d-dimensional real symmetric positive definite matrix A and a d-dimensional vector, $\vec{b}$ be a d-dimensional vector, f be a function for computing $A\vec{x}$ based on a matrix X and a d-dimensional vector $\vec{x}$, k be an integer of d or less, i be each of integers from 1 to k, $\vec{x}_0$ be a d-dimensional vector for which a suitable value is set, and D be chosen to be equal to 1/d, an approximate solution $\vec{x}_k$ of a solution $\vec{x}^*$ of $A\vec{x} = b\sim$ with secret values of the set X and a secret value of the vector $\vec{b}$ used as inputs,
the secure computation apparatus comprising:

an initialization unit (12) adapted to compute the following expression using secure computation, and generate secret values of vectors $\vec{p}_0$ and $\vec{r}_0$ and a value $\rho_0$;

$$\vec{p}_0 = \vec{r}_0 = \vec{b} - f(X, \vec{x}_0),$$

$$\rho_0 = \vec{r}_0^T \vec{r}_0$$

a first computation unit (13) adapted to compute the following expression using secure computation, and generate a secret value of a vector $\vec{a}_{i-1}$;

$$\vec{a}_{i-1} = D \times (f(X, \vec{p}_{i-1}))$$

a second computation unit (14) adapted to compute the following expression using secure computation, and generate a secret value of a value $\gamma_{i-1}$;

$$\gamma_{i-1} = D \times (\vec{p}_{i-1}^T \vec{a}_{i-1})$$

a third computation unit (15) adapted to compute the following expression using secure computation, and generate a secret value of a value $\alpha_{i-1}$;

$$\alpha_{i-1} = \frac{\rho_{i-1}}{\gamma_{i-1}}$$

a fourth computation unit (16) adapted to compute the following expression using secure computation, and generate a secret value of a vector $\vec{d}_i$;

$$\vec{d}_i = D \times (\alpha_{i-1} \vec{p}_{i-1})$$

a fifth computation unit (17) adapted to compute the following expression using secure computation, and generate a secret value of a vector $\vec{x}_i$;

$$\vec{x}_i = \vec{x}_{i-1} + \vec{d}_i$$

a sixth computation unit (18) adapted to compute the following expression using secure computation, and generate a secret value of a vector $\vec{r}_i$;

$$\vec{r}_i = \vec{r}_{i-1} - \alpha_{i-1} \vec{a}_{i-1}$$

a seventh computation unit (19) adapted to compute the following expression using secure computation, and generate a secret value of a value $\rho_i$;

$$\rho_i = D \times (\vec{r}_i^T \vec{r}_i)$$

an eighth computation unit (20) adapted to compute the following expression using secure computation, and generate a secret value of a value $\beta_i$;

$$\beta_i = \frac{\rho_i}{\rho_{i-1}}$$

a ninth computation unit (21) adapted to compute the following expression using secure computation, and generate a secret value of a vector $\vec{p}_i$.

$$\vec{p}_i = \vec{r}_i - \beta_i \vec{p}_{i-1}$$

**2.** A secure conjugate gradient method computation system (100) comprising a plurality of secure computation apparatuses ($1_1$, ... , $1_N$), the secure conjugate gradient method computation system being adapted to obtain, letting X be a set of values for computing a product of a d-dimensional real symmetric positive definite matrix A and a d-dimensional vector, $\vec{b}$ be a d-dimensional vector, f be a function for computing $A\vec{x}$ based on a matrix X and a d-dimensional vector $\vec{x}$, k be an integer of d or less, i be each of integers from 1 to k, $\vec{x}_0$ be a d-dimensional vector for which a suitable value is set, and D be a value whose absolute value is less than 1 and other than 0, an approximate solution $\vec{x}_k$ of a solution $\vec{x}\text{-}*$ of $A\vec{x} = \vec{b}$ with secret values of the set X and a secret value of the vector $\vec{b}$ used as inputs, the plurality of secure computation apparatuses performing cooperative computation on fragments on numerical values distributed over the secure computation apparatuses,

wherein each of the secure computation apparatuses is the secure computation apparatus according to claim 1.

**3.** A secure conjugate gradient method computation method executed by a secure conjugate gradient method computation system (100) including a plurality of secure computation apparatuses ($1_1$, ..., $1_N$), the secure conjugate gradient method computation system being adapted to obtain and being implemented using fixed-point numbers, letting X be a set of values for computing a product of a d-dimensional real symmetric positive definite matrix A and a d-dimensional vector, $\vec{b}$ be a d-dimensional vector, f be a function for computing $A\vec{x}$ based on a matrix X and a d-dimensional vector $\vec{x}$, k be an integer of d or less, i be each of integers from 1 to k, $\vec{x}_0$ be a d-dimensional vector for which a suitable value is set, and D be chosen to be equal to 1/d, an approximate solution $\vec{x}_k$ of a solution $\vec{x}*$ of $A\vec{x} = \vec{b}$ with secret values of the set X and a secret value of the vector $\vec{b}$ used as inputs, the method comprising the steps of:

an initialization unit (12) of each of the secure computation apparatuses computing the following expression using secure computation, and generating secret values of vectors $\vec{p}_0$ and $\vec{r}_0$ and a value $\rho_0$;

$$\vec{p}_0 = \vec{r}_0 = \vec{b} - f(X, \vec{x}_0),$$

$$\rho_0 = \vec{r}_0^T \vec{r}_0$$

a first computation unit (13) of each of the secure computation apparatuses computing the following expression using secure computation, and generating a secret value of a vector $\vec{a}_{i-1}$;

$$\vec{a}_{i-1} = D \times \left( f(X, \vec{p}_{i-1}) \right)$$

a second computation unit (14) of each of the secure computation apparatuses computing the following expression using secure computation, and generating a secret value of a value $\gamma_{i-1}$;

$$\gamma_{i-1} = D \times \left( \vec{p}_{i-1}^T \vec{a}_{i-1} \right)$$

a third computation unit (15) of each of the secure computation apparatuses computing the following expression using secure computation, and generating a secret value of a value $\alpha_{i-1}$;

$$\alpha_{i-1} = \frac{\rho_{i-1}}{\gamma_{i-1}}$$

a fourth computation unit (16) of each of the secure computation apparatuses computing the following expression using secure computation, and generating a secret value of a vector $\vec{d}_i$;

$$\vec{d}_i = D \times \left( \alpha_{i-1} \vec{p}_{i-1} \right)$$

a fifth computation unit (17) of each of the secure computation apparatuses computing the following expression using secure computation, and generating a secret value of a vector $\vec{x}_i$;

$$\vec{x}_i = \vec{x}_{i-1} + \vec{d}_i$$

a sixth computation unit (18) of each of the secure computation apparatuses computing the following expression using secure computation, and generating a secret value of a vector $\vec{r}_i$;

$$\vec{r}_i = \vec{r}_{i-1} - \alpha_{i-1} \vec{a}_{i-1}$$

a seventh computation unit (19) of each of the secure computation apparatuses computing the following expression using secure computation, and generating a secret value of a value $\rho_i$;

$$\rho_i = D \times \left( \vec{r}_i^T \vec{r}_i \right)$$

an eighth computation unit (20) of each of the secure computation apparatuses computing the following expression using secure computation, and generating a secret value of a value $\beta_i$;

$$\beta_i = \frac{\rho_i}{\rho_{i-1}}$$

a ninth computation unit (21) of each of the secure computation apparatuses computing the following expression using secure computation, and generating a secret value of a vector $\vec{p}_i$.

$$\vec{p}_i = \vec{r}_i - \beta_i \vec{p}_{i-1}$$

4. A program for causing a computer to function as the secure computation apparatus according to claim 1.

**Patentansprüche**

1. Vorrichtung ($1_n$) zur sicheren Berechnung, die in einem System (100) zur sicheren Berechnung eines Verfahrens der konjugierten Gradienten verwendet wird, wobei das System zur sicheren Berechnung eines Verfahrens der konjugierten Gradienten unter Verwendung von Festkommazahlen implementiert wird, wobei X eine Menge von Werten zum Berechnen eines Produkts einer d-dimensionalen reellen symmetrischen positiv definiten Matrix A und eines d-dimensionalen Vektors ist, $\vec{b}$ ein d-dimensionaler Vektor ist, f eine Funktion zum Berechnen von $A\vec{x}$ auf der Grundlage einer Matrix X und eines d-dimensionalen Vektors $\vec{x}$ ist, k eine ganze Zahl von d oder weniger ist, i jede ganze Zahl von 1 bis k ist, $\vec{x}_0$ ein d-dimensionaler Vektor ist, für den ein geeigneter Wert festgelegt ist, und D gleich 1/d gewählt ist, wobei das System derart ausgelegt ist, dass es eine Näherungslösung $\vec{x}_k$ einer Lösung $\vec{x}^*$ von $A\vec{x} = \vec{b}$ erlangt, wobei geheime Werte der Menge X und ein geheimer Wert des Vektors $\vec{b}$ als Eingaben verwendet werden, wobei die Vorrichtung zur sicheren Berechnung umfasst:

eine Initialisierungseinheit (12), die derart ausgelegt ist, dass sie den folgenden Ausdruck unter Verwendung einer sicheren Berechnung berechnet und geheime Werte von Vektoren $\vec{p}_0$ und $\vec{r}_0$ sowie einem Wert $\rho_0$ generiert,

$$\vec{p}_0 = \vec{r}_0 = \vec{b} - f(X, \vec{x}_0),$$

$$\rho_0 = \vec{r}_0^T \vec{r}_0$$

eine erste Berechnungseinheit (13), die derart ausgelegt ist, dass sie den folgenden Ausdruck unter Verwendung einer sicheren Berechnung berechnet und einen geheimen Wert eines Vektors $\vec{a}_{i-1}$ generiert,

$$\vec{a}_{i-1} = D \times (f(X, \vec{p}_{i-1}))$$

eine zweite Berechnungseinheit (14), die derart ausgelegt ist, dass sie den folgenden Ausdruck unter Verwendung einer sicheren Berechnung berechnet und einen geheimen Wert eines Wertes $\gamma_{i-1}$ generiert,

$$\gamma_{i-1} = D \times (\vec{p}_{i-1}^T \vec{a}_{i-1})$$

eine dritte Berechnungseinheit (15), die derart ausgelegt ist, dass sie den folgenden Ausdruck unter Verwendung einer sicheren Berechnung berechnet und einen geheimen Wert eines Wertes $\alpha_{i-1}$ generiert,

$$\alpha_{i-1} = \frac{\rho_{i-1}}{\gamma_{i-1}}$$

eine vierte Berechnungseinheit (16), die derart ausgelegt ist, dass sie den folgenden Ausdruck unter Verwendung einer sicheren Berechnung berechnet und einen geheimen Wert eines Vektors $\vec{d}_i$ generiert,

$$\vec{d}_i = D \times (\alpha_{i-1} \vec{p}_{i-1})$$

eine fünfte Berechnungseinheit (17), die derart ausgelegt ist, dass sie den folgenden Ausdruck unter Verwendung einer sicheren Berechnung berechnet und einen geheimen Wert eines Vektors $\vec{x}_i$ generiert,

$$\vec{x}_i = \vec{x}_{i-1} + \vec{d}_i$$

eine sechste Berechnungseinheit (18), die derart ausgelegt ist, dass sie den folgenden Ausdruck unter Verwendung einer sicheren Berechnung berechnet und einen geheimen Wert eines Vektors $\vec{r}_i$ generiert,

$$\vec{r}_i = \vec{r}_{i-1} - \alpha_{i-1}\vec{a}_{i-1}$$

eine siebte Berechnungseinheit (19), die derart ausgelegt ist, dass sie den folgenden Ausdruck unter Verwendung einer sicheren Berechnung berechnet und einen geheimen Wert eines Wertes $\rho_i$ generiert,

$$\rho_i = D \times (\vec{r}_i^T \vec{r}_i)$$

eine achte Berechnungseinheit (20), die derart ausgelegt ist, dass sie den folgenden Ausdruck unter Verwendung einer sicheren Berechnung berechnet und einen geheimen Wert eines Wertes $\beta_i$ generiert,

$$\beta_i = \frac{\rho_i}{\rho_{i-1}}$$

eine neunte Berechnungseinheit (21), die derart ausgelegt ist, dass sie den folgenden Ausdruck unter Verwendung einer sicheren Berechnung berechnet und einen geheimen Wert eines Vektors $\vec{p}_i$ generiert.

$$\vec{p}_i = \vec{r}_i - \beta_i \vec{p}_{i-1}$$

2. System (100) zur sicheren Berechnung eines Verfahrens der konjugierten Gradienten, das mehrere Vorrichtungen ($1_1$, ..., $1_N$) zur sicheren Berechnung umfasst, wobei das System zur sicheren Berechnung eines Verfahrens der konjugierten Gradienten, wenn X eine Menge von Werten zum Berechnen eines Produkts einer d-dimensionalen reellen symmetrischen positiv definiten Matrix A und eines d-dimensionalen Vektors ist, $\vec{b}$ ein d-dimensionaler Vektor ist, f eine Funktion zum Berechnen von $A\vec{x}$ auf der Grundlage einer Matrix X und eines d-dimensionalen Vektors $\vec{x}$ ist, k eine ganze Zahl von d oder weniger ist, i jede ganze Zahl von 1 bis k ist, $\vec{x}_0$ ein d-dimensionaler Vektor ist, für den ein geeigneter Wert festgelegt ist, und D ein Wert ist, dessen Absolutwert kleiner als 1 und von 0 verschieden ist, derart ausgelegt ist, dass es eine Näherungslösung $\vec{x}_k$ einer Lösung $\vec{x}^*$ von $A\vec{x}$ = $\vec{b}$ erlangt, wobei geheime Werte der Menge X und ein geheimer Wert des Vektors $\vec{b}$ als Eingaben verwendet werden, wobei die mehreren Vorrichtungen zur sicheren Berechnung eine kooperative Berechnung an Fragmenten numerischer Werte durchführen, die über die Vorrichtungen zur sicheren Berechnung verteilt sind, wobei jede der Vorrichtungen zur sicheren Berechnung die Vorrichtung zur sicheren Berechnung nach Anspruch 1 ist.

3. Verfahren zur sicheren Berechnung eines Verfahrens der konjugierten Gradienten, das durch ein System (100) zur sicheren Berechnung eines Verfahrens der konjugierten Gradienten, das mehrere Vorrichtungen ($1_1$, ... $1_N$) zur sicheren Berechnung umfasst, ausgeführt wird, wobei das System zur sicheren Berechnung eines Verfahrens der konjugierten Gradienten unter Verwendung von Festkommazahlen implementiert wird, wobei X eine Menge von Werten zum Berechnen eines Produkts einer d-dimensionalen reellen symmetrischen positiv definiten Matrix A und eines d-dimensionalen Vektors ist, $\vec{b}$ ein d-dimensionaler Vektor ist, f eine Funktion zum Berechnen von $A\vec{x}$ auf der Grundlage einer Matrix X und eines d-dimensionalen Vektors $\vec{x}$ ist, k eine ganze Zahl von d oder weniger ist, i jede ganze Zahl von 1 bis k ist, $\vec{x}_0$ ein d-dimensionaler Vektor ist, für den ein geeigneter Wert festgelegt ist, und D gleich 1/d gewählt ist, und das System derart ausgelegt ist, dass es eine Näherungslösung $\vec{x}_k$ einer Lösung $\vec{x}^*$ von $A\vec{x}$ = $\vec{b}$ erlangt, wobei geheime Werte der Menge X und ein geheimer Wert des Vektors $\vec{b}$ als Eingaben verwendet werden, wobei das Verfahren die folgenden Schritte umfasst:

Berechnen, durch eine Initialisierungseinheit (12) jeder der Vorrichtungen zur sicheren Berechnung, des folgenden Ausdrucks unter Verwendung einer sicheren Berechnung, und Generieren geheimer Werte von Vektoren $\vec{p}_0$ und $\vec{r}_0$ sowie einem Wert $\rho_0$,

$$\vec{p}_0 = \vec{r}_0 = \vec{b} - f(X, \vec{x}_0),$$

$$\rho_0 = \vec{r}_0^T \vec{r}_0$$

Berechnen, durch eine erste Berechnungseinheit (13) jeder der Vorrichtungen zur sicheren Berechnung, des folgenden Ausdrucks unter Verwendung einer sicheren Berechnung, und Generieren eines geheimen Wertes eines Vektors $\vec{a}_{i-1}$,

$$\vec{a}_{i-1} = D \times (f(X, \vec{p}_{i-1}))$$

Berechnen, durch eine zweite Berechnungseinheit (14) jeder der Vorrichtungen zur sicheren Berechnung, des folgenden Ausdrucks unter Verwendung einer sicheren Berechnung, und Generieren eines geheimen Wertes eines Wertes $\gamma_{i-1}$,

$$\gamma_{i-1} = D \times (\vec{p}_{i-1}^T \vec{a}_{i-1})$$

Berechnen, durch eine dritte Berechnungseinheit (15) jeder der Vorrichtungen zur sicheren Berechnung, des folgenden Ausdrucks unter Verwendung einer sicheren Berechnung, und Generieren eines geheimen Wertes eines Wertes $\alpha_{i-1}$,

$$\alpha_{i-1} = \frac{\rho_{i-1}}{\gamma_{i-1}}$$

Berechnen, durch eine vierte Berechnungseinheit (16) jeder der Vorrichtungen zur sicheren Berechnung, des folgenden Ausdrucks unter Verwendung einer sicheren Berechnung, und Generieren eines geheimen Wertes eines Vektors $\vec{d}_i$,

$$\vec{d}_i = D \times (\alpha_{i-1}\vec{p}_{i-1})$$

Berechnen, durch eine fünfte Berechnungseinheit (17) jeder der Vorrichtungen zur sicheren Berechnung, des folgenden Ausdrucks unter Verwendung einer sicheren Berechnung, und Genieren eines geheimen Wertes eines Vektors $\vec{x}_i$,

$$\vec{x}_i = \vec{x}_{i-1} + \vec{d}_i$$

Berechnen, durch eine sechste Berechnungseinheit (18) jeder der Vorrichtungen zur sicheren Berechnung, des folgenden Ausdrucks unter Verwendung einer sicheren Berechnung, und Generieren eines geheimen Wertes eines Vektors $\vec{r}_i$,

$$\vec{r}_i = \vec{r}_{i-1} - \alpha_{i-1}\vec{a}_{i-1}$$

Berechnen, durch eine siebte Berechnungseinheit (19) jeder der Vorrichtungen zur sicheren Berechnung, des folgenden Ausdrucks unter Verwendung einer sicheren Berechnung, und Generieren eines geheimen Wertes eines Wertes $\rho_i$,

$$\rho_i = D \times (\vec{r}_i^T \vec{r}_i)$$

Berechnen, durch eine achte Berechnungseinheit (20) jeder der Vorrichtungen zur sicheren Berechnung, des folgenden Ausdrucks unter Verwendung einer sicheren Berechnung, und Generieren eines geheimen Wertes eines Wertes $\beta_i$,

$$\beta_i = \frac{\rho_i}{\rho_{i-1}}$$

Berechnen, durch eine neunte Berechnungseinheit (21) jeder der Vorrichtungen zur sicheren Berechnung, des folgenden Ausdrucks unter Verwendung einer sicheren Berechnung, und Generieren eines geheimen Wertes eines Vektors $\vec{p}_i$.

$$\vec{p}_i = \vec{r}_i - \beta_i \vec{p}_{i-1}$$

4. Programm zum Veranlassen eines Computers, als Vorrichtung zur sicheren Berechnung nach Anspruch 1 zu funktionieren.

**Revendications**

1. Appareil de calcul sécurisé ($1_n$) utilisé dans un système de calcul sécurisé de la méthode du gradient conjugué (100) apte à obtenir, le système de calcul sécurisé de la méthode du gradient conjugué étant mis en oeuvre en utilisant des nombres à virgule fixe, X étant un ensemble de valeurs pour calculer un produit d'une matrice définie positive symétrique réelle à d dimensions A et d'un vecteur à d dimensions, $\vec{b}$ étant un vecteur à d dimensions, f étant une fonction pour calculer $\overrightarrow{Ax}$ sur la base d'une matrice X et d'un vecteur à d dimensions $\vec{x}$, k étant un entier inférieur ou égal d, i étant chacun des entiers de 1 à k, $\vec{x_0}$ étant un vecteur à d dimensions pour lequel une valeur appropriée est réglée, et D étant choisi pour être égal à 1/d, une solution approchée $\vec{x_k}$ d'une solution $\vec{x^*}$ de $\overrightarrow{Ax} = \vec{b}$ avec des valeurs secrètes de l'ensemble X et une valeur secrète du vecteur $\vec{b}$ utilisées en tant qu'entrées,
l'appareil de calcul sécurisé comprenant :

une unité d'initialisation (12) apte à calculer l'expression suivante en utilisant un calcul sécurisé, et générer des valeurs secrètes de vecteurs $\vec{p_0}$ et $\vec{r_0}$ et une valeur $\rho_0$ :

$$\vec{p_0} = \vec{r_0} = \vec{b} - f(X, \vec{x_0}),$$

$$\rho_0 = \vec{r_0}^T \vec{r_0}$$

une première unité de calcul (13) apte à calculer l'expression suivante en utilisant un calcul sécurisé, et générer une valeur secrète d'un vec-

teur $\overrightarrow{a_{i-1}}$ :

$$\vec{a}_{i-1} = D \times \left( f\left(X, \vec{p}_{i-1}\right)\right)$$

une deuxième unité de calcul (14) apte à calculer l'expression suivante en utilisant un calcul sécurisé, et générer une valeur secrète d'une valeur $\overrightarrow{\gamma_{i-1}}$ :

$$\gamma_{i-1} = D \times \left( \vec{p}_{i-1}^{T} \vec{a}_{i-1} \right)$$

une troisième unité de calcul (15) apte à calculer l'expression suivante en utilisant un calcul sécurisé, et générer une valeur secrète d'une valeur $\alpha_{i-1}$ :

$$\alpha_{i-1} = \frac{\rho_{i-1}}{\gamma_{i-1}}$$

une quatrième unité de calcul (16) apte à calculer l'expression suivante en utilisant un calcul sécurisé, et générer une valeur secrète d'un vecteur $\vec{d_i}$ :

$$\vec{d}_i = D \times \left( \alpha_{i-1} \vec{p}_{i-1} \right)$$

une cinquième unité de calcul (17) apte à calculer l'expression suivante en utilisant un calcul sécurisé, et générer une valeur secrète d'un vecteur $\vec{x_i}$ :

$$\vec{x}_i = \vec{x}_{i-1} + \vec{d}_i$$

une sixième unité de calcul (18) apte à calculer l'expression suivante en utilisant un calcul sécurisé, et générer une valeur secrète d'un vecteur $\vec{r_i}$ :

$$\vec{r}_i = \vec{r}_{i-1} - \alpha_{i-1} \vec{a}_{i-1}$$

une septième unité de calcul (19) apte à calculer l'expression suivante en utilisant un calcul sécurisé, et générer une valeur secrète d'un vecteur $\rho_i$ :

$$\rho_i = D \times \left( \vec{r}_i^{T} \vec{r}_i \right)$$

une huitième unité de calcul (20) apte à calculer l'expression suivante en utilisant un calcul sécurisé, et générer une valeur secrète d'un vecteur $\beta_i$ :

$$\beta_i = \frac{\rho_i}{\rho_{i-1}}$$

une neuvième unité de calcul (21) apte à calculer l'expression suivante en utilisant un calcul sécurisé, et générer une valeur secrète d'un vecteur $\vec{p_i}$ :

$$\vec{p}_i = \vec{r}_i - \beta_i \vec{p}_{i-1}$$

2. Système de calcul sécurisé de la méthode du gradient conjugué (100) comprenant une pluralité d'appareils de calcul sécurisé ($1_1$, ..., $1_N$), le système de calcul sécurisé de la méthode du gradient conjugué étant apte à obtenir, X étant un ensemble de valeurs pour calculer un produit d'une matrice définie positive symétrique réelle à d dimensions A et d'un vecteur à d dimensions, $\vec{b}$ étant un vecteur à d dimensions, f étant une fonction pour calculer $\overrightarrow{Ax}$ sur la base d'une matrice X et d'un vecteur à d dimensions $\vec{x}$, k étant un entier inférieur ou égal d, i étant chacun des entiers de 1 à k, $\vec{x_0}$ étant un vecteur à d dimensions pour lequel une valeur appropriée est réglée, et D étant une valeur dont une valeur absolue est inférieure à 1 et différente de 0, une solution approchée $\vec{x_k}$ d'une solution $\vec{x^*}$ de $\overrightarrow{Ax} = \vec{b}$ avec des valeurs secrètes de l'ensemble X et une valeur secrète du vecteur $\vec{b}$ utilisées en tant qu'entrées, la pluralité d'appareils de calcul sécurisé réalisant un calcul coopératif sur des fragments de valeurs numériques réparties sur les appareils de calcul sécurisé, dans lequel chacun des appareils de calcul sécurisé est l'appareil de calcul sécurisé selon la revendication 1.

3. Procédé de calcul sécurisé de la méthode du gradient conjugué exécuté par un système de calcul sécurisé de la méthode du gradient conjugué (100) incluant une pluralité d'appareils de calcul sécurisé ($1_1$, ..., $1_N$), le système de calcul sécurisé de la méthode du gradient conjugué étant apte à obtenir et étant mis en oeuvre en utilisant des nombres à virgule fixe, X étant un ensemble de valeurs pour calculer un produit d'une matrice définie positive symétrique réelle à d dimensions A et d'un vecteur à d

dimensions, $\vec{b}$ étant un vecteur à d dimensions, f étant une fonction pour calculer $\overrightarrow{Ax}$ sur la base d'une matrice X et d'un vecteur à d dimensions $\vec{x}$, k étant un entier inférieur ou égal d, i étant chacun des entiers de 1 à k, $\vec{x_0}$ étant un vecteur à d dimensions pour lequel une valeur appropriée est réglée, et D étant choisi pour être égal à 1/d, une solution approchée $\vec{x_k}$ d'une solution $\vec{x^*}$ de $\overrightarrow{Ax} = \vec{b}$ avec des valeurs secrètes de l'ensemble X et une valeur secrète du vecteur $\vec{b}$ utilisées en tant qu'entrées, le procédé comprenant les étapes suivantes :

par une unité d'initialisation (12) de chacun des appareils de calcul sécurisé, le calcul de l'expression suivante en utilisant un calcul sécurisé, et la génération de valeurs secrètes de vecteurs $\vec{p_0}$ et $\vec{r_0}$ et une valeur $\rho_0$ :

$$\vec{p}_0 = \vec{r}_0 = \vec{b} - f(X, \vec{x}_0),$$

$$\rho_0 = \vec{r}_0^T \vec{r}_0$$

par une première unité de calcul (13) de chacun des appareils de calcul sécurisé, le calcul de l'expression suivante en utilisant un calcul sécurisé, et la génération d'une valeur secrète d'un vecteur $\overrightarrow{a_{i-1}}$ :

$$\vec{a}_{i-1} = D \times \left( f(X, \vec{p}_{i-1}) \right)$$

par une deuxième unité de calcul (14) de chacun des appareils de calcul sécurisé, le calcul de l'expression suivante en utilisant un calcul sécurisé, et la génération d'une valeur secrète d'une valeur $\gamma_{i-1}$ :

$$\gamma_{i-1} = D \times \left( \vec{p}_{i-1}^T \vec{a}_{i-1} \right)$$

par une troisième unité de calcul (15) de chacun des appareils de calcul sécurisé, le calcul de l'expression suivante en utilisant un calcul sécurisé, et la génération d'une valeur secrète d'une valeur $\alpha_{i-1}$ :

$$\alpha_{i-1} = \frac{\rho_{i-1}}{\gamma_{i-1}}$$

par une quatrième unité de calcul (16) de chacun des appareils de calcul sécurisé, le calcul de l'expression suivante en utilisant un calcul sécurisé, et la génération d'une valeur secrète d'un vecteur $\vec{d_i}$ :

$$\vec{d}_i = D \times \left( \alpha_{i-1} \vec{p}_{i-1} \right)$$

par une cinquième unité de calcul (17) de chacun des appareils de calcul sécurisé, le calcul de l'expression suivante en utilisant un calcul sécurisé, et la génération d'une valeur secrète d'un vecteur $\vec{x_i}$ :

$$\vec{x}_i = \vec{x}_{i-1} + \vec{d}_i$$

par une sixième unité de calcul (18) de chacun des appareils de calcul sécurisé, le calcul de l'expression suivante en utilisant un calcul sécurisé, et la génération d'une valeur secrète d'un vecteur $\vec{r_i}$ :

$$\vec{r}_i = \vec{r}_{i-1} - \alpha_{i-1} \vec{a}_{i-1}$$

par une septième unité de calcul (19) de chacun des appareils de calcul sécurisé, le calcul de l'expression suivante en utilisant un calcul sécurisé, et la génération d'une valeur secrète d'un vecteur $\rho_i$ :

$$\rho_i = D \times \left( \vec{r}_i^T \vec{r}_i \right)$$

par une huitième unité de calcul (20) de chacun des appareils de calcul sécurisé, le calcul de l'expression suivante en utilisant un calcul sécurisé, et la génération d'une valeur secrète d'un vecteur $\beta_i$ :

$$\beta_i = \frac{\rho_i}{\rho_{i-1}}$$

par une neuvième unité de calcul (21) de chacun des appareils de calcul sécurisé, le calcul de l'expression suivante en utilisant un calcul sécurisé, et la génération d'une valeur secrète d'un vecteur $\vec{p_i}$ :

$$\vec{p}_i = \vec{r}_i - \beta_i \vec{p}_{i-1}$$

4. Programme pour amener un ordinateur à fonctionner en tant que l'appareil de calcul sécurisé selon la revendication 1.

$$\vec{p}_i = \vec{r}_i - \beta_i \vec{p}_{i-1}$$

SECURE CONJUGATE GRANDIENT
METHOD COMPUTATION SYSTEM  100

Fig. 1

Fig. 2

## SECURE CONJUGATE GRANDIENT METHOD COMPUTATION METHOD

START

INPUT SECRET VALUES OF SET X
AND VECTOR b→ — S11

$$\vec{p}_0 = \vec{r}_0 = \vec{b} - f(X, \vec{x}_0), \rho_0 = \vec{r}_0^T \vec{r}_0$$ — S12

$$\vec{a}_{i-1} = D \times \left( f(X, \vec{p}_{i-1}) \right)$$ — S13

$$\gamma_{i-1} = D \times \left( \vec{p}_{i-1}^T \vec{a}_{i-1} \right)$$ — S14

$$\alpha_{i-1} = \frac{\rho_{i-1}}{\gamma_{i-1}}$$ — S15

$$\vec{d}_i = D \times \left( \alpha_{i-1} \vec{p}_{i-1} \right)$$ — S16

$$\vec{x}_i = \vec{x}_{i-1} + \vec{d}_i$$ — S17

$$\vec{r}_i = \vec{r}_{i-1} - \alpha_{i-1} \vec{a}_{i-1}$$ — S18

$$\rho_i = D \times \left( \vec{r}_i^T \vec{r}_i \right)$$ — S19

$$\beta_i = \frac{\rho_i}{\rho_{i-1}}$$ — S20

$$\vec{p}_i = \vec{r}_i - \beta_i \vec{p}_{i-1}$$ — S21

i=i+1 ← No — $i \geqq k?$ — S22-1

S22-2

Yes

OUTPUT SECRET VALUE OF
VECTOR x→$_k$ — S23

END

Fig. 3

1000 COMPUTER

INPUT UNIT — 1030

OUTPUT UNIT — 1040

DISPAY UNIT — 1050

CONTROL UNIT — 1010

STORAGE UNIT — 1020

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JONATHAN RICHARD SHEWCHUK.** *An Introduction to the Conjugate Gradient Method Without the Agonizing Pain,* 1994

- **ADRIA GASCON et al.** Privacy-Preserving Distributed Linear Regression on High-Dimensional Data. *IACR, International Association for Cryptologic Research, Proceedings on Privacy Enhancing Technologies,* 2017, vol. 4, 248-267